# EUROPÄISCHE PATENTSCHRIFT

(11) **EP 0 817 922 B1**
(45) Veröffentlichungstag und Bekanntmachung des Hinweises auf die Patenterteilung: **25.08.1999**
(21) Anmeldenummer: 96909105.7
(22) Anmeldetag: 21.03.1996
(51) Int. Cl.: F16B 37/04

(54) **KLAMMERFÖRMIGE BLECHMUTTER MIT ZENTRIERSTREIFEN**
CLIP-LIKE SHEET METAL NUT WITH CENTRING STRIP
ECROU CLIP A BRETELLE DE CENTRAGE POUR TOLE

(30) Priorität: 30.03.1995 DE 19511802
(43) Veröffentlichungstag der Anmeldung: 14.01.1998
(73) Patentinhaber: A. Raymond & Cie, 38028 Grenoble (FR)
(72) Erfinder: LEROUX, Alain, Notre-Dame-de-l'Osier (FR)
(74) Vertreter: Kirchgaesser, Johannes, Dipl.-Ing.
(86) Internationale Anmeldenummer: EP9601223
(87) Internationale Veröffentlichungsnummer: WO9630659

(56) Entgegenhaltungen:
- DE-B- 2 828 078
- FR-A- 2 429 924
- US-A- 2 255 469

## Beschreibung

Die Erfindung betrifft eine klammerförmige Blechmutter zum Aufstecken auf eine Trägerplatte. Die Blechmutter besteht hierbei aus zwei C-förmig miteinander verbundenen Schenkeln mit einem Gewindeeindruck im einen Schenkel und einem Schrauben-Durchgangsloch im anderen Schenkel. Um das Durchgangsloch herum ist über mindestens drei Viertel des Lochumfangs ein ringförmiger Zentrierstreifen eingeschnitten, der - in Aufsteckrichtung gesehen - in seinem hinteren Bereich zum Gewindeschenkel hin schräg hochgebogen ist.

Derartige Aufsteckmuttern dienen dem Zweck, Trägerplatten, wie beispielsweise Karosseriebleche von Kraftfahrzeugen, mit anderen Bauteilen oder Blechen zu verbinden. Hierbei bietet der Zentrierstreifen den Vorteil, daß das Gewinde der Blechmutter beim Aufstecken genau über dem Befestigungsloch der Trägerplatte fixiert wird und dann beim späteren Eindrehen der Schraube nicht mehr gehalten zu werden braucht, was insbesondere bei schwer zugänglichen Befestigungslöchern eine große Montageerleichterung darstellt.

Sind die Trägerbleche mit einer Schutzschicht, beispielsweise mit einer Lackschicht überzogen, so darf diese Schicht durch den Befestigungsvorgang nicht beschädigt werden. Deshalb ist es wichtig, daß der Zentrierstreifen beim Aufstecken der Blechmutter weich zurückfedern und dabei ohne Behinderung in das Loch des Klemmschenkels, aus dem der Zentrierstreifen ausgeschnitten ist, eintauchen kann. Um diese Forderung zu erfüllen, ist der Zentrierstreifen bei dem der Erfindung zugrundegelegten Stand der Technik nach **DE 28 28 078 C2** so eingeschnitten, daß dieser von einem freigeschnittenen Bereich umgeben ist. Für diesen Freischnitt muß der Klemmschenkel jedoch breiter ausgebildet werden, so daß als Ausgangsmaterial ein entsprechend breiterer Blechstreifen benötigt wird. Außerdem kann die größere Schenkelbreite bei beengten Platzverhältnissen hinderlich sein.

Aufgabe der Erfindung ist es, den Zentrierstreifen bei der eingangs genannten Blechmutter so zu gestalten, daß bei gleich guter Auffedereigenschaft auf den Freischnitt weitgehend verzichtet werden kann und demzufolge auch weniger Blechmaterial zur Herstellung der Blechmutter benötigt wird.

Diese Aufgabe wird nach der vorliegenden Erfindung dadurch gelöst, daß der eingeschnittene Zentrierstreifen auf seiner ganzen Länge in sich um 90° verkantet ist und damit zur Ebene des Klemmschenkels hochkant steht. Dadurch ergibt sich vorteilhafterweise ein tieferes Eintauchen des Zentrierstreifens in das Befestigungsloch der Trägerplatte und damit ein besserer Zentriereffekt. Außerdem ist der Außendurchmesser des hochgestellten Zentrierstreifens kleiner als der Außendurchmesser des herkömmlichen flachliegenden Zentrierstreifens, so daß das Durchgangsloch in der Trägerplatte entsprechend dem kleineren Außendurchmesser des Zentrierstreifens auch kleiner ausgebildet sein kann.

Die Vorteile der Erfindung machen sich besonders bei einer Zentrierringausbildung bemerkbar, bei der der Zentrierstreifen über zwei parallele, leicht auffederbare Stege mit dem Klemmschenkel verbunden und mit seiner Außenkante zwischen den Verbindungsstegen in die Hochkantlage gedreht ist.

Ein Ausführungsbeispiel der erfindungsgemäßen Blechmutter ist in der Zeichnung dargestellt und soll nachfolgend näher erläutert werden. Es zeigt
- Fig.1: eine klammerförmige Blechmutter in Seitenansicht,
- Fig.2: einen Horizontalschnitt durch die Blechmutter zwischen den beiden Schenkeln mit Blick auf den Zentrierstreifen,
- Fig.3: einen Querschnitt durch den Klemmschenkel nach Fig.2 und
- Fig.4: eine auf der Trägerplatte vormontierte Blechmutter in Zentrierposition

Die in den Figuren dargestellte Blechmutter besteht aus zwei C-förmig miteinander verbundenen Schenkeln **1** und **2**, wobei der eine Schenkel **1** mit einem Schraubengewinde **3** und der andere Schenkel 2 mit einem Durchgangsloch **4** für die in das Gewinde **3** einzudrehende Schraube versehen ist.

Der Gewindeschenkel **1** ist hierbei mit einem in Aufsteckrichtung "A" trichterförmig hochgeführten Einführschenkel **5** versehen , welcher im vorliegenden Ausführungsbeispiel über zwei elastisch auffederbare Stege **6** und eine Querwand **7** mit dem anderen Klemmschenkel **2** verbunden ist. Damit wird erreicht, daß der Gewindeschenkel **1** beim Aufstecken der Blechmutter auf Trägerplatten mit unterschiedlicher Stärke immer flach auf der Platte aufliegt.

Das Schraubengewinde **3** befindet sich in einer sogenannten Gewindehülse **8**, die aus dem Gewindeschenkel **1** in der bekannten Methode des Tiefziehens herausgeformt ist. Es versteht sich, daß an Stelle der Gewindehülse **8** ebenso auch ein Gewindeeindruck mit nur einem Gewindegang **3** zum Eindrehen einer sogenannten Blechschraube vorgesehen sein kann.

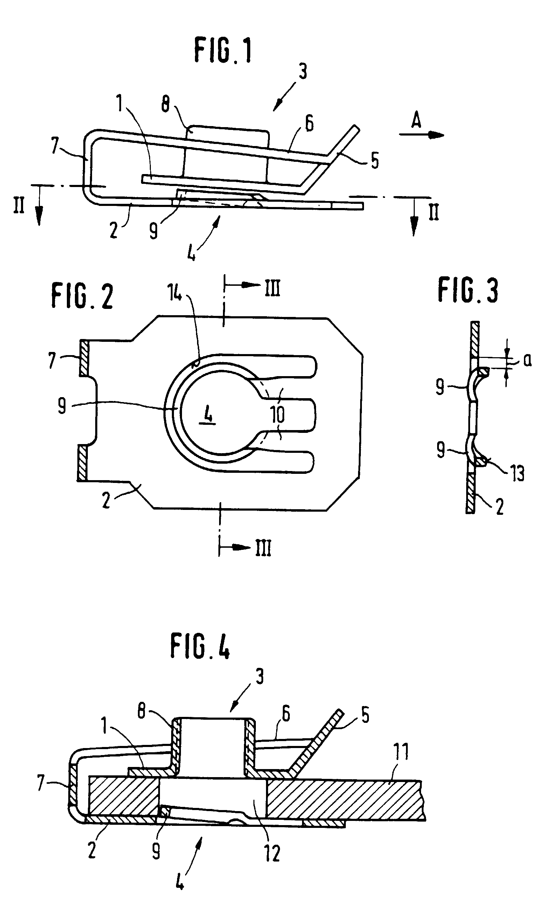

Um das Durchgangsloch **4** herum ist über mindestens drei Viertel des Loch umfanges ein Zentrierstreifen **9** in den Klemmschenkel **2** eingeschnitten, der über zwei parallele Stege **10** mit dem Klemmschenkel **2** leicht auffederbar verbunden und - in Aufsteckrichtung "A" gesehen - in seinem hinteren Bereich zum Gewindeschenkel **1** hin hochgebogen ist. Dieser Zentrierstreifen **9** dient dazu, die Blechmutter beim Aufstecken auf eine Trägerplatte **11** (vgl.Fig.4) genau über dem Befestigungsloch **12** zu fixieren, indem der Zentrierstreifen **9** zunächst in die Ebene des Klemmschenkels **2** ausweicht und dann in das Befestigungsloch **12** zurückfedert und dort einrastet.

Wie insbesondere aus Fig. 2 und 3 ersichtlich, ist der Zentrierstreifen **9** auf seiner ganzen Länge in sich um 90° verkantet, wobei vorzugsweise die Außenkante **13** hochkant gestellt ist. Dadurch ergibt sich ein kleiner Abstand "a" zwischen dem Streifen **9** und der beim Ausstanzen des Zentrierstreifens **9** gebildeten Schnittkante **14** im Klemmschenkel **2** mit dem Vorteil, daß der Zentrierstreifen **9** auch ohne Freischnitt wie beim Stand der Technik in die Ebene des Klemmschenkels **2** einfedern kann.

Das Verdrehen bzw. Verkanten des Zentrierstreifens **9** in die Hochkantlage läßt sich fertigungstechnisch auf einfache Weise dadurch erreichen, daß unter dem Streifen **9** eine Matrize plaziert wird, deren Innendurchmesser kleiner ist als der Außendurchmesser des ausgestanzten, aber noch flachliegenden Streifens **9**, und daß dann dieser Streifen **9** mit einem Stempel in diese Matrize gedrückt wird, dessen Außendurchmesser etwas größer ist als der Innendurchmesser des flachliegenden Streifens **9**. Hierbei sollte der Zwischenraum zwischen Stempel und Matrize etwa gleich der Blechstärke des Zentrierstreifens **9** sein, so daß der Streifen **9** beim Eintauchen in die Matrize zwangsläufig um 90° gekantet wird.

## Patentansprüche

1. Klammerförmige Blechmutter zum Aufstecken auf eine Trägerplatte ( 11 ) mit einem Gewindeeindruck ( 3 ) im einen Schenkel ( 6 ) und einem Schrauben-Durchgangsloch ( 4 ) im anderen Schenkel ( 2 ), wobei um das Durchgangsloch ( 4) herum über mindestens drei Viertel des Lochumfangs ein ringförmiger Zentrierstreifen ( 9 ) eingeschnitten ist, der - in Aufsteckrichtung gesehen - in seinem hinteren Bereich zum Gewindeschenkel ( 6 ) hin hochgebogen ist, **dadurch gekennzeichnet**, daß der Zentrierstreifen ( 9 ) auf seiner ganzen Länge in sich um 90 ° verkantet ist.

2. Klammerförmige Blechmutter nach Anspruch 1, bei der der Zentrierstreifen (9) über zwei parallele, leicht auffederbare Stege ( 10 ) mit dem Klemmschenkel ( 2 ) verbunden ist, **dadurch gekennzeichnet**, daß der Zentrierstreifen (9) mit seiner Außenkante ( 13 ) zwischen den Verbindungsstegen ( 10 ) in die Hochkantlage gedreht ist.

## Claims

1. A sheet metal nut in clip form for fitting on to a carrier plate (11) having a screwthreaded indentation (3) in the one leg (6) and a hole (4) for a screw to pass therethrough in the other leg (2), wherein cut in around the through hole (4) over at least three quarters of the periphery of the hole is an annular centering strip (9) which in its rear region - viewed in the fitting-on direction - is bent up towards tne screwthreaded leg (6), characterised in that the centering strip (9) is tilted over its entire length in itself through 90°.

2. A sheet metal nut in clip form according to claim 1 wherein the centering strip (9) is connected to the clamping leg (2) by way of two parallel, easily springable limbs (10), characterised in that the centering strip (9) is turned with its outside edge (13) into the on-edge position between the connecting limbs (10).

## Revendications

1. Ecrou en tôle du type à agrafage destiné à être emmanché sur une plaque formant support (11), comportant une amorce de filetage (3) dans une branche (6) et un trou de passage de vis (4) dans l'autre branche (2), une lamelle de centrage de forme circulaire (9) étant en l'occurrence réalisée par découpage autour du trou de passage (4), sur au moins les trois quarts du périmètre du trou, lamelle qui, lorsqu'on observe l'écrou dans le sens de son emmanchement, est repliée vers le haut, au niveau de sa partie arrière, en direction de la branche formant filetage (6), caractérisé en ce que la lamelle de centrage (9) est repliée à 90° sur toute sa longueur.

2. Ecrou en tôle du type à agrafage selon la revendication 1, dans lequel la lamelle de centrage (9) est reliée à la branche de serrage (2) par l'intermédiaire de deux barrettes entretoises (10) parallèles, capables de céder légèrement par déformation élastique, caractérisé en ce que l'arête extérieure (13) de la lamelle de centrage (9) est amenée par torsion dans une position de chant entre les barrettes entretoises (10).
